# EUROPÄISCHE PATENTSCHRIFT

(11) **EP 1 210 258 B1**
(45) Veröffentlichungstag und Bekanntmachung des Hinweises auf die Patenterteilung: **19.03.2008**
(21) Anmeldenummer: 01938049.2
(22) Anmeldetag: 26.03.2001
(51) Int. Cl.: B60T 8/96, B60T 13/68, B60T 17/22

(54) **BREMSANLAGE FÜR KRAFTFAHRZEUGE**
BRAKING SYSTEM FOR MOTOR VEHICLES
SYSTEME DE FREINAGE POUR VEHICULES AUTOMOBILES

(30) Priorität: 27.03.2000 DE 10015226; 31.01.2001 DE 10104238
(43) Veröffentlichungstag der Anmeldung: 05.06.2002
(73) Patentinhaber: Continental Teves AG & Co. oHG, 60488 Frankfurt (DE)
(72) Erfinder: DRUMM, Stefan, A., 55291 Saulheim (DE)
(74) Vertreter: Dusil, Vladimir
(86) Internationale Anmeldenummer: PCT/EP2001/003419
(87) Internationale Veröffentlichungsnummer: WO 2001/072567

(56) Entgegenhaltungen:
- DE-A- 10 010 242
- DE-A- 19 701 659
- DE-A- 19 807 366
- GB-A- 2 284 871

## Beschreibung

Die vorliegende Erfindung betrifft eine Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in einer Rückfallbetriebsart betrieben werden kann, in der nur der Betrieb durch den Fahrzeugführer möglich ist, mit
a) einem Bremspedal zum Betätigen einer hydraulischen Kolben-Zylinder-Anordnung, auf deren Kolben bei der Ansteuerung der Bremsanlage durch den Fahrzeugführer eine Betätigungskraft (Pedalkraft) ausgeübt wird,
b) einem mit der hydraulischen Kolben-Zylinder-Anordnung zusammenwirkenden Wegsimulator,
c) einem Druckmittelvorratsbehälter und einer hydraulischen Hilfsdruckquelle, mit deren Druck die Radbremsen in der "Brake-by-Wire" Betriebsart beaufschlagbar sind,
d) einer elektronischen Steuer- und Regeleinheit, sowie
e) zwischen der Hilfsdruckquelle und den Radbremsen unter Zwischenschaltung von Trennkolbeneinrichtungen geschalteten, elektrisch steuerbaren Druckaufbauventilen und zwischen den Trennkolbeneinrichtungen und dem Druckmittelvorratsbehälter geschalteten Druckabbauventilen, wobei die Trennkolbeneinrichtungen in der "Brake-by-Wire"- Betriebsart auf einer ersten Trennkolbenfläche mit dem durch die Druckauf- und - abbauventile eingestellten Druck beaufschlagt werden und den von einer zweiten Trennkolbenfläche ausgeübten Druck an die Radbremsen weitergeben.

Eine derartige Bremsanlage ist z. B. aus der internationalen Patentanmeldung WO 99/58735 bekannt. Fällt beispielsweise in einer solchen Bremsanlage während des Betriebs in der bevorzugten "Brake-by-Wire"- Betriebsart der Strom aus, nehmen die den Trennkolbeneinrichtungen vorgeschalteten Druckregelventile der vorbekannten Bremsanlage eine Schaltstellung ein, in der eine Verbindung zwischen den Trennkolbeneinrichtungen und dem Druckmittelvorratsbehälter ermöglicht wird, so dass auf den ersten Trennkolbenflächen kein Druck mehr anliegt und die Trennkolben unter der Wirkung von Rückstellfedern in ihre Ausgangsposition zurückkehren und durch das damit verbundene Zurückweichen der zweiten Trennkolbenflächen ein mit den Radbremsen verbundenes Volumen zur Aufnahme von Druckmittel geschaffen wird, das dem in den Druckmittelvorratsbehälter abgelassenen Volumen entspricht. Gleichzeitig werden auch in den Leitungen zwischen der hydraulischen Kolben-Zylinder-Anordnung und den Trennkolbeneinrichtungen eingefügte, elektrisch schaltbare Trennventile geöffnet, über die aus der mit der Pedalkraft beaufschlagten Kolben- Zylinder- Anordnung Druckmittel in das frei werdende Volumen nachströmt. Die Trennkolben werden dadurch entgegen der Betätigungsrichtung im "Brake-by-Wire"- Modus verschoben. Zum wieder Erreichen des Radbrems- Druckniveaus, das vor dem Stromausfall bestanden hatte, muss das gesamte frei werdende Volumen wieder aufgefüllt werden. Entsprechend weit fällt in dieser Situation das Bremspedal durch, so dass der das Pedal betätigende Fahrer den Eindruck eines schwerwiegenden Bremsenversagens bekommt. Dadurch wird die Betriebssicherheit der vorbekannten Bremsanlage, insbesondere beim Stromausfall, wesentlich beeinträchtigt.

Aus der DE 198 07 366 A1 ist eine elektrohydraulische Bremsanlage bekannt, bei der in der "Brake-by-wire"-Betriebsart der hydraulische Druck in den der Vorderachse des Fahrzeuges zugeordneten Radbremsen mittels Medientrennkolben aufgebaut wird, die mit dem Druck einer Hilfsdruckquelle beaufschlagt werden. Als nachteilig wird jedoch die Tatsache empfunden, dass bei einem Stromausfall die Medientrennkolben nicht bewegt werden können, so dass ein hilfsdruckunterstütztes Abbremsen der Vorderachse nicht möglich ist.

Es ist daher Aufgabe der vorliegenden Erfindung eine Erhöhung der Betriebssicherheit der Bremsanlage der eingangs genannten Gattung zu erreichen bzw. eine Bremsanlage vorzuschlagen, bei der bei einem Stromausfall ein hilfsdruckunterstütztes Abbremsen der Räder beider Fahrzeugachsen möglich ist.

Diese Aufgabe wird erfindungsgemäß dadurch gelöst, dass die Druckaufbauventile als stromlos offene Ventile ausgebildet sind und dass die Trennkolbeneinrichtungen bei einem Stromausfall mittels eines mechanisch ansteuerbaren Druckaufbauventils in einer Richtung betätigbar sind, die der Betätigungsrichtung in der "Brake-by-Wire"-Betriebsart entspricht.

Vorteilhafte Weiterbildungen des Erfindungsgegenstandes sind in den Unteransprüchen 2 bis 18 aufgeführt.

Im folgenden werden Beispiele der Ausführungsformen der Erfindung unter Bezugnahme auf die beiliegenden schematischen Zeichnungen näher erläutert. In den Zeichnungen zeigen:
- Fig. 1: den Aufbau der erfindungsgemäßen Bremsanlage gemäß einer ersten Ausführungsform,
- Fig. 2: den Aufbau einer zweiten erfindungsgemäßen Ausführungsform der Bremsanlage, und
- Fig. 3: einen bei der in Fig. 1 gezeigten Ausführungsform einsetzbaren mechanischen Kraftübertragungsmechanismus in schematischer dreidimensionaler Darstellung.

Die in der Zeichnung lediglich schematisch dargestellte Bremsanlage besteht im wesentlichen aus einer mittels eines Bremspedals 1 betätigbaren hydraulischen Kolben-Zylinder-Anordnung 2, einem mit der Kolben-Zylinder-Anordnung 2 zusammenwirkenden Wegsimulator 3, einem der Kolben-Zylinder-Anordnung 2 zugeordneten Druckmittelvorratsbehälter 4, einer hydraulischen Hilfsdruckquelle 5, Trennkolbeneinrichtungen 6a, 6b, denen elektrisch steuerbare Druckregelventile 7a, 8a, 7b, 8b vorgeschaltet sind und an die nicht dargestellte Fahrzeugbremsen angeschlossen sind, sowie einer nicht dargestellten elektronischen Steuer- und Regeleinheit. Dabei ist vorzugsweise jeder Radbremse eine Trennkolbeneinrichtung zugeordnet.

Die in einem Gehäuse 20 angeordnete Kolben-Zylinder-Anordnung 2 weist einen in einer Bohrung 22 verschiebbar geführten Kolben 21 auf, der einen hydraulischen Raum 23 begrenzt, der einerseits über ein elektrisch steuerbares Druckaufbauventil 9 mit der Hilfsdruckquelle 5 und andererseits über die erstgenannten Druckregel- bzw. Druckaufbauventile 7a, 7b mit den Trennkolbeneinrichtungen 6a, 6b verbindbar ist. Der im Raum 23 eingesteuerte Systemdruck wird mittels eines Drucksensors 17 erfaßt. Die Hilfsdruckquelle 5 wird vorzugsweise durch eine an den Druckmittelvorratsbehälter 5 angeschlossene Pumpe 15 sowie einen Hochdruckspeicher 16 gebildet, dessen Druck bzw. Füllzustand mittels nicht gezeigter Sensoren überwacht werden. Außerdem ist der Raum 23 über ein elektrisch schaltbares Verbindungsventil 11 an eine hydraulische Verbindung 10 anschließbar, die mittels einer mechanisch steuerbaren Druckaufbau-/Druckabbau-Ventilkombination 12, 13 mit der Hilfsdruckquelle 5 oder dem Druckmittelvorratsbehälter 4 verbindbar ist. Die mechanisch steuerbare Druckaufbau/Druckabbau-Ventilkombination 12, 13 wird vorzugsweise durch ein zwei Steuerkanten aufweisendes Schieberventil gebildet, das beispielsweise mittels eines drehbar gelagerten Kipphebels 14 durch den Kolben 21 betätigbar ist. Andere konstruktive Ausführungen der Ventilkombination 12, 13 wie z. B. eine Kombination von Sitzventilen sowie andere konstruktive Ausführungen des Betätigungsmechanismus wie beispielsweise eine direkte Betätigung durch den Kolben 21 ohne Zwischenschaltung eines Kipphebels sind möglich. Der vorhin erwähnte Wegsimulator 3, der dem Fahrer im Brake-by-Wire-Modus das gewohnte Bremspedalgefühl vermittelt, besteht in einer bevorzugten, für die Erfindung aber nicht notwendigerweise verbindlichen Ausgestaltung aus einem Simulatorkolben 31 sowie mindestens einem von zwei elastischen Elementen 32, 33, die in einer zylindrischen Ausnehmung 34 des Kolbens 21 angeordnet sind, wobei der Simulatorkolben 31 über eine Betätigungsstange 35 mit dem Bremspedal 1 gekoppelt ist. Lediglich schematisch angedeutete, durch die Bewegung des Kolbens 21 betätigbare Sperrmittel 26, beispielsweise federnd vorgespannte Klemmkörper, verhindern eine Relativbewegung des Simulatorkolbens 31 gegenüber dem Kolben 21 in Betätigungsrichtung, wenn dieser über ein bestimmtes Maß hinaus in der Betätigungsrichtung verschoben wird.

Außerdem ist im Gehäuse 20 ein Anschlag 18 vorgesehen, der eine übermäßige Bewegung des Kolbens 21 entgegen der Betätigungsrichtung begrenzt. Für eine Vorspannung des Kolbens 21 entgegen der Betätigungsrichtung sorgt eine Rückstellfeder 24, die eine axiale Verlängerung 25 des Kolbens 21 radial umgreift, deren Aufgabe im nachfolgenden Text erläutert wird. Der Bremspedalweg bzw. der Fahrerverzögeritngswunsch kann mittels eines Wegsensors 19 erfaßt werden.

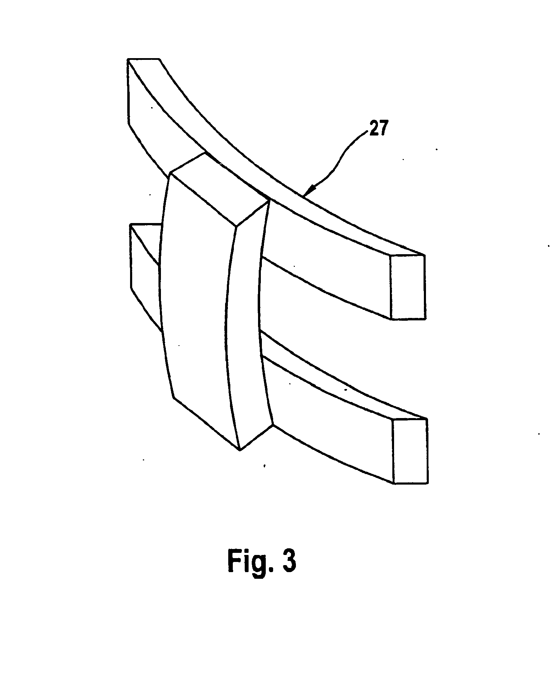

Wie der Zeichnung weiter zu entnehmen ist, umfassen die Trennkolbeneinrichtungen 6a, 6b jeweils einen Trennkolben 36a, 36b, die jeweils eine erste Trennkolbenfläche 37a, 37b sowie eine zweite Trennkolbenfläche 47a, 47b aufweisen, und die entgegen ihrer Betätigungsrichtung durch jeweils eine Druckfeder 48a, 48b vorgespannt sind. Die druckmäßige Zuordnung der Trennkolbenflächen 37a, 37b sowie 47a, 47b ist dabei vorzugsweise derart getroffen, daß die erste Trennkolbenfläche 37a, 37b mit dem im Raum 23 eingesteuerten Druck (Systemdruck) beaufschlagbar ist, während die Trennkolbenfläche 47a, 47b dem Aufbau eines hydraulischen Druckes in den Radbremsen dient. Die vorhin erwähnte Verlängerung 25 des Kolbens 21 dient einer Kraftübertragung zwischen dem Kolben 21 und den Trennkolben 36a, 36b, die mittels eines lediglich schematisch angedeuteten mechanischen Kraftübertragungsmechanismus 27 erfolgt. Ein derartiger Kraftübertragungsmechanismus, der vorzugsweise als eine Waagebalkenanordnung ausgeführt ist, ist in Fig. 3 dargestellt. Von den Trennkolben 36a, 36b begrenzte Druckräume 49a, 49b sind mittels absperrbarer hydraulischer Verbindungen mit Druckmittelvorratsbehältern verbindbar, die vorzugsweise mit dem Druckmittelvorratsbehälter 4 eine nicht dargestellte Einheit bilden können, wodurch ein begrenzter Austausch von Druckmittel zwischen den ansonsten getrennten hydraulischen Kreisen ermöglicht wird.

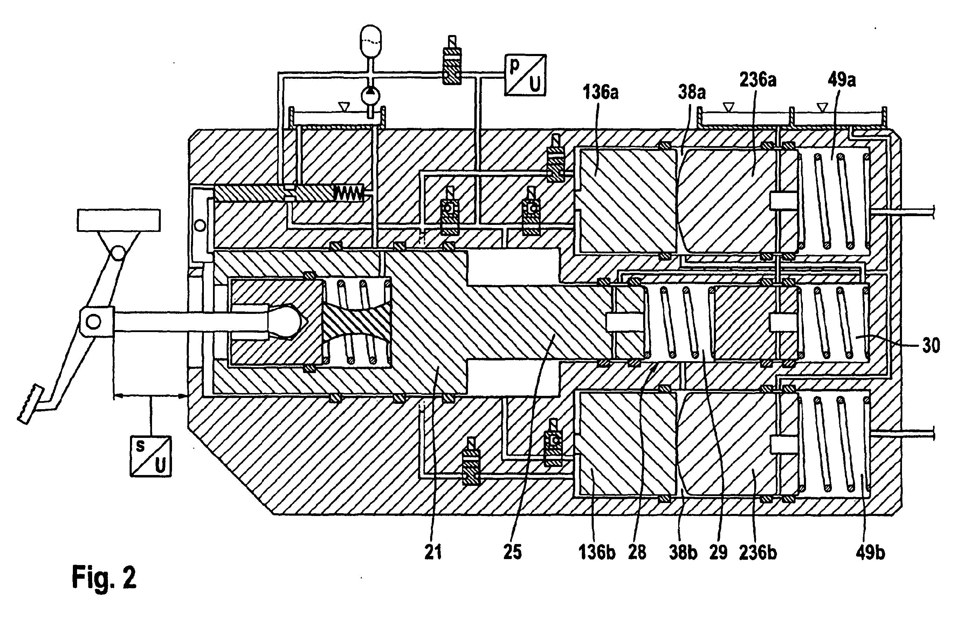

Der Aufbau der in Fig. 2 dargestellten zweiten Ausführung des Erfindungsgegenstandes entspricht weitgehend dem vorhin erläuterten Aufbau der ersten Ausführung. Der Unterschied besteht in der Ausbildung des zwischen dem Kolben 21 bzw. 25 und den Trennkolbeneinrichtungen 6a, 6b wirkenden Kraftübertragungsmechanismus, der bei dem in Fig. 2 gezeigten Beispiel als eine hydraulische Anordnung ausgeführt ist. Im dargestellten Beispiel wirkt die Verlängerung 25 des Kolbens 21 kraftubertragend mit einem zweikreisigen Druckgeber 28 zusammen, an dessen Druckräume 29, 30 hydraulische Räume 38a, 38b angeschlossen sind, die die Trennkolben 36a, 36b in zwei voneinander unabhängig bewegbare Abschnitte 136a,b; 236a,b teilen. Dadurch können die zweiten Trennkolbenflächen 47a, b in Betätigungsrichtung verschoben werden, während die ersten Trennkolbenflächen 37a, b unbetätigt bleiben. An die von den zweiten Trennkolbenflächen 47a, b begrenzten Druckräume 49a,b sind die vorhin erwähnten Radbremsen angeschlossen.

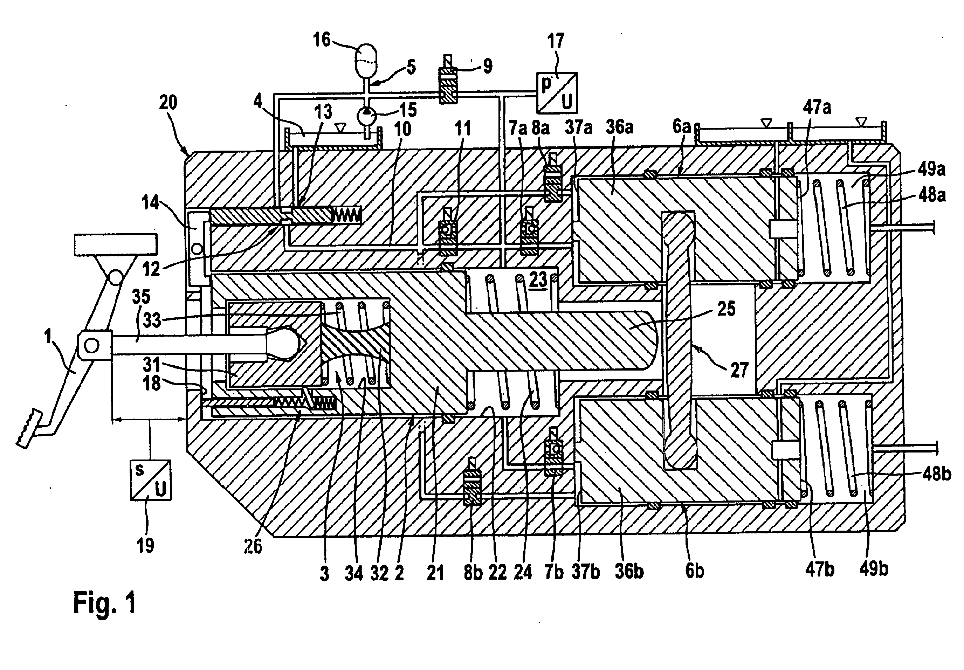

Im nachfolgenden Text wird die Funktionsweise der erfindungsgemäßen Bremsanlage an dem in Fig. 1 gezeigten Ausführungsbeispiel näher erläutert.

Im unbetätigten Zustand des Bremspedals 1 wird der Simulatorkolben 31 über die elastischen Elemente 32, 33 gegen einen näher nicht bezeichneten, im Kolben 21 ausgebildeten Anschlag gedrückt. In der bevorzugten Brake-by-Wire-Betriebsart wird der am Bremspedal 1 mittels des Wegsensors 19 erfaßte Fahrerverzögerungswunsch in einer nicht dargestellten elektronischen Steuereinheit in einen im Raum 23 einzusteuernden Systemdruckwert umgerechnet, der mittels des elektrisch steuerbaren Druckaufbauventils 9 sowie des elektrisch steuerbaren Verbindungsventils 11 eingestellt wird. Dabei wird der Kolben 21 durch den Systemdruck am Anschlag 18 gehalten, so daß dem Fahrer bei Betätigung des Bremspedals 1 ein Pedalgefühl vermittelt wird, das durch die elastischen Elemente 32, 33 vorgegeben ist. In der Position des Kolbens 21 am Anschlag 18 ist das mechanisch betätigbare Druckabbauventil 13 vermöge der Ansteuerung über den Kipphebel 14 in geöffnetem Zustand, so daß die hydraulische Verbindung 10 mit dem Druckmittelvorratsbehälter 4 verbunden ist und bei Bedarf mit dem elektrisch steuerbaren Verbindungsventil 11 ein Druckabbau im Raum 23 bewirkt werden kann. Die elektrisch steuerbaren Druckregelventile 7a, 8a, 7b, 8b ermöglichen eine radindividuelle Bremsdruckanpassung. Bei vom Fahrzeugführer unabhängigen Bremsungen bzw. "Fremd"-Bremsungen, beispielsweise bei ASR, ESP und ACC-Bremsvorgängen, wird von einem elektronischen Fahrerassistenzsystem eine Soll-Verzögerung oder ein Systemdruckwert direkt vorgegeben.

Bei einem Stromausfall, der beispielsweise durch einen Batteriedefekt, einen Kurzschluß oder durch Ausschalten der Zündung verursacht wird, geht die erfindungsgemäße Bremsanlage automatisch in eine erste Rückfallbetriebsart über, in der hydraulisch verstärkte Fahrerbremsungen möglich sind. Bei einer Betätigung durch den Fahrer bewegt sich der Kolben 21 zunächst vom Anschlag 18 weg. Dabei kommt er jedoch nicht weit, da das mechanisch ansteuerbare Druckaufbauventil 12 öffnet und den Systemdruck so lange erhöht, bis der Kolben 21 wieder in die Nähe des Anschlags 18 zurückgedrückt wird. Beim Nachlassen der Fahrerbetätigung wird der Systemdruck über das mechanisch ansteuerbare Druckabbauventil 13 entsprechend abgebaut. Die Pedalcharakteristik ist praktisch gleich der in der Brake-by-Wire-Betriebsart, wobei lediglich die kleine Verschiebung des Kolbens 21 aus der Position am Anschlag 18 in die Position in der Nähe des Anschlags 18 und das geringe Regelspiel der mechanisch steuerbaren Druckaufbau-Druckabbauventil-Kombination 12, 13 (Überdeckungsweg des Schiebers) geringe, vom Fahrer kaum wahrnehmbare Änderungen der Pedalcharakteristik verursachen. Fremdbremsvorgänge, die für ASR, ESP und ACC benötigt werden, sind nicht möglich, wobei ABS ohne Strom auch nicht funktionsfähig ist. Das Übertragungsverhalten des Bremssystems ist durch eine lineare Bremskraftverstärkung ohne Springerfunktion charakterisiert.

Der größte Vorteil der erfindungsgemäßen Einführung dieser neuen Rückfallbetriebsart liegt in der Behebung des oben erwähnten Hauptnachteils der Bremsanlage gemäß der WO 98/57835. Bei einem während einer Bremsung auftretenden Stromausfall entstehen keine irritierenden Pedalkraftänderungen und -bewegungen.

Die erste Rückfallbetriebsart greift auch bei einem Defekt des elektrisch steuerbaren Druckaufbauventils 9. In diesem Fall sind sogar ABS-geregelte Bremsvorgänge möglich.

Bei einem Ausfall des Hilfsdrucks, geht die erfindungsgemäße Bremsanlage automatisch in eine zweite Rückfallbetriebsart über. Bei einer Betätigung durch den Fahrer bewegt sich der Kolben 21 vom Anschlag 18 weg und erzeugt beim Eintauchen in den Raum 23 einen Systemdruck, der auf die ersten Trennkolbenflächen 37a, 37b wirkt.
In dieser Betriebsart ändert sich die Pedalcharakteristik, weil sich der Kolben 21 signifikant vom Anschlag 18 weg bewegt. Dabei kann der Simulatorkolben 31 durch die vorhin erwähnten Sperrmittel 26, beispielsweise durch Reibschluß, mit dem Kolben 21 verriegelt werden, um den Pedalweg nicht groß werden zu lassen.

Bei einem Versagen des Druckaufbaus im Raum 23 geht die erfindungsgemäße Bremsanlage automatisch in eine dritte Rückfallbetriebsart über. Wenn beispielsweise durch eine Undichtigkeit ein Aufbau von Systemdruck im Raum 23 nicht möglich ist, taucht der Kolben 21 in den Raum 23 ein, ohne daß sich die Trennkolben 36a, 36b bewegen. In diesem Fall greift der im Zusammenhang mit Fig. 1 beschriebene mechanisch betätigbare Kraftübertragungsmechanismus 27, der nach Zurücklegen eines durch die Abmessungen der Konstruktion festgelegten Anfangskolbenwegs die Bewegung des Kolbens 21 auf die Trennkolben 36a,b überträgt. Die Übertragung erfolgt dabei vorzugsweise derart, daß die Summe der Trennkolbenwege gleich dem Kolbenweg ist. Die beschriebene dritte Rückfallbetriebsart wird benötigt, weil die Kraftübertragung der zweiten Rückfallbetriebsart via Systemdruck eine hydraulisch nur einkreisige Stelle des Bremssystems darstellt.

Wie bereits erläutert wurde, behebt die erste Rückfallbetriebsart einen schwerwiegenden Nachteil im Stand der Technik, nämlich die Probleme beim Stromausfall während einer Brake-by-Wire-Bremsung. Die zweite Rückfallbetriebsart wird aktiv, wenn kein Hilfsdruck verfügbar ist. Die dritte Rückfallbetriebsart wird aktiv, wenn kein Systemdruck aufbaubar ist. Dieser Fehler entspricht im Stand der Technik einem Kreisausfall durch Versagen einer Dichtung des als hydraulische Kolben-Zylinder-Anordnung verwendeten Tandemhauptzylinders. Während dort in der einzigen Rückfallbetriebsart nur noch zwei Fahrzeugräder bremsbar sind, können bei der erfindungsgemäßen Bremsanlage noch alle vier Räder gebremst werden.

Die vorgeschlagene Bremsanlage ist durch die Mehrzahl der automatisch ansprechenden Rückfallbetriebsarten und die vier hydrostatischen Radbremskreise sicherer als die Bremsanlage gemäß dem zitierten Stand der Technik und sicherer als alle heute in Serie gebauten Bremssysteme, und zwar bei gleichem, wenn nicht sogar geringerem Aufwand an Bauraum, Gewicht und Anzahl von technisch anspruchsvollen Teilen wie Ventile, Kolben und Dichtungen. Als "Brake-by-Wire"-Bremssystem erfüllt sie die aktuellen Forderungen nach integrierter Bremskraftverstärkung mit frei definierbarer Kennlinie, beispielsweise mit "Springerfunktion", Fremdsteuerbarkeit und Pedalrückwirkungsfreiheit bei elektronischen Eingriffen zur Bremsdruckregelung.

## Patentansprüche

1. Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in einer Rückfallbetriebsart betrieben werden kann, in der nur der Betrieb durch den Fahrzeugführer möglich ist, mit
a) einem Bremspedal (1) zum Betätigen einer hydraulischen Kolben-Zylinder-Anordnung (2), auf deren Kolben (21) bei der Ansteuerung der Bremsanlage durch den Fahrzeugführer eine Betätigungskraft ausgeübt wird,
b) einem mit der hydraulischen Kolben-Zylinder-Anordnung (2) zusammenwirkenden Wegsimulator (3 bzw. 31-33),
c) einem Druckmittelvorratsbehälter (4) und einer hydraulischen Hilfsdruckquelle (5), mit deren Druck die Radbremsen in der "Brake-by-Wire" Betriebsart beaufschlagbar sind,
d) einer elektronischen Steuer- und Regeleinheit, sowie
e) zwischen der Hilfsdruckquelle (5) und den Radbremsen unter Zwischenschaltung von Trennkolbeneinrichtungen (6a, 6b) geschalteten, elektrisch steuerbaren Druckaufbauventilen (7a, 7b) und zwischen den Trennkolbeneinrichtungen (6a, 6b) und dem Druckmittelvorratsbehälter (4) geschalteten Druckabbauventilen (8a, 8b), wobei die Trennkolbeneinrichtungen (6a, 6b) in der "Brake-by-Wire"- Betriebsart auf einer ersten Trennkolbenfläche (37a, 37b) mit dem durch die Druckauf- (7a, 7b) und -abbauventile (8a,8b) eingestellten Druck beaufschlagt werden und den von einer zweiten Trennkolbenfläche (47a, 47b) ausgeübten Druck an die Radbremsen weitergeben,
**dadurch gekennzeichnet, dass**
die Druckaufbauventile (7a, 7b) als stromlos offene (SO-) Ventile ausgebildet sind und dass die Trennkolbeneinrichtungen (6a, 6b) bei einem Stromausfall mittels eines mechanisch ansteuerbaren Druckaufbauventils (12) in einer Richtung betätigbar sind, die der Betätigungsrichtung in der "Brake-by-Wire"-Betriebsart entspricht.

2. Bremsanlage nach Anspruch 1 **dadurch gekennzeichnet, dass** der Kolben (21) der hydraulischen Kolben-Zylinder-Anordnung (2) in einen hydraulischen Raum (23) eintaucht, der einerseits über ein elektrisch steuerbares Druckaufbauventil (9) mit der Hilfsdruckquelle (5) und andererseits über ein elektrisch steuerbares Verbindungsventil (11) sowie ein mechanisch steuerbares Druckabbauventil (13) mit dem Druckmittelvorratsbehälter (4) verbindbar ist.

3. Bremsanlage nach Anspruch 1 oder 2 **dadurch gekennzeichnet, dass** für den Kolben (21) der hydraulischen Kolben-Zylinder-Anordnung (2) ein Anschlag (18) vorgesehen ist, der den Weg des Kolbens (21) entgegen der Betätigungsrichtung begrenzt.

4. Bremsanlage nach Anspruch 3 **dadurch gekennzeichnet, dass** das mechanisch steuerbare Druckabbauventil (13) mit dem Kolben (21) der hydraulischen Kolben-Zylinder-Anordnung (2) derart zusammenwirkt, dass das mechanisch steuerbare Druckabbauventil (13) kurz vor Erreichen des Anschlags (18) öffnet.

5. Bremsanlage nach Anspruch 4 **dadurch gekennzeichnet, dass** das mechanisch steuerbare Druckabbauventil (13) mit einem mechanisch steuerbaren Druckaufbauventil (12) gekoppelt ist, das einen Druckaufbau im Raum (23) verursacht, sobald der Kolben (21) sich in Betätigungsrichtung vom Anschlag (18) über ein Maß hinaus bewegt, das einer Druckaufbauposition entspricht.

6. Bremsanlage nach einem der Ansprüche 2 bis 5 **dadurch gekennzeichnet, dass** die Trennkolbeneinrichtungen (6a, 6b) jeweils einerseits über ein elektrisch steuerbares erstes Druckregelventil (7a, 7b) mit dem Raum (23) und andererseits über ein elektrisch steuerbares zweites Druckregelventil (8a, 8b) sowie das mechanisch steuerbare Druckabbauventil (13) mit dem Druckmittelvorratsbehälter (4) verbindbar sind.

7. Bremsanlage nach einem oder mehreren der vorangegangenen Ansprüche **dadurch gekennzeichnet, dass** jeder Radbremse eine Trennkolbeneinrichtung (6a, 6b) zugeordnet ist.

8. Bremsanlage nach einem oder mehreren der Ansprüche 1 bis 7 **dadurch gekennzeichnet, dass** die Betätigung der Trennkolbeneinrichtungen (6a, 6b) durch Beaufschlagung der ersten Trennkolbenfläche (37a, 37b) mit einem Druck erfolgt.

9. Bremsanlage nach einem oder mehreren der Ansprüche 1 bis 7 **dadurch gekennzeichnet, dass** die Betätigung der Trennkolbeneinrichtungen (6a, 6b) durch Mittel (27) zur Ankopplung des vom Kolben (21) zurückgelegten Verfahrwegs an die Verfahrwege der zweiten Trennkolbenflächen (48a, 48b) erfolgt.

10. Bremsanlage nach einem oder mehreren der Ansprüche 1 bis 8 **dadurch gekennzeichnet, dass** die Druckbeaufschlagung der ersten Trennkolbenfläche (37a, 37b) in einer ersten Rückfallbetriebsart durch einen von der Hilfsdruckquelle (5) gelieferten und von der mechanisch betätigten Druckauf- und -abbauventil-Kombination (12,13) eingestellten hydraulischen Druck erfolgt.

11. Bremsanlage nach Anspruch 8 **dadurch gekennzeichnet, dass** die Druckbeaufschlagung der ersten Trennkolbenflächen (37a, 37b) in einer zweiten Rückfallbetriebsart durch einen Druck erfolgt, der durch ein Eintauchen des Kolbens (21) in den Raum (23) entsteht.

12. Bremsanlage nach Anspruch 9 **dadurch gekennzeichnet, dass** in einer dritten Rückfallbetriebsart die Weg-Ankopplungsmittel (27) den Weg des Kolbens (21) an die Summe der Verfahrwege der zweiten Trennkolbenflächen, (38a, 38b) anbinden.

13. Bremsanlage nach Anspruch 9 oder 12 **dadurch gekennzeichnet, dass** die Weg-Ankopplungsmittel durch eine Waagebalkenanordnung (27) gebildet werden.

14. Bremsanlage nach Anspruch 9 oder 12 **dadurch gekennzeichnet, daß** die Weg-Ankopplungsmittel durch einen hydraulischen Kraftübertragungsmechanismus (28, 29,30,38a,b) gebildet werden.

15. Bremsanlage nach Anspruch 14 **dadurch gekennzeichnet, daß** der hydraulische Kraftübertragungsmechanismus durch einen ein- oder zweikreisigen Druckgeber (28) sowie hydraulische Räume (38a,38b) gebildet wird, die die Trennkolben in zwei unabhängig bewegbare Abschnitte (136a,b; 236a,b) teilen.

16. Bremsanlage nach einem oder mehreren der Ansprüche 2 bis 15 **dadurch gekennzeichnet, daß** in der "Brake-by-Wire"- Betriebsart im hydraulischen Raum (23) mit Hilfe des elektrisch steuerbaren Druckaufbauventils (9) und des elektrisch steuerbaren Verbindungsventils (11) ein Systemdruck eingestellt wird, aus dem über die den Trennkolbeneinrichtungen (6a, 6b) vorgeschalteten, elektrisch steuerbaren Druckregelventile (7a, 8a, 7b, 8b) radindividuelle Bremsdrücke ableitbar sind.

17. Bremsanlage nach einem oder mehreren der Ansprüche 1 bis 16 **dadurch gekennzeichnet, daß** zumindest in Betätigungsrichtung wirksame Sperrmittel (26) vorgesehen sind, die eine Relativbewegung des Wegsimulators (3 bzw. 31-33) in Betätigungsrichtung gegenüber dem Kolben (21) der hydraulischen Kolben-Zylinder-Anordnung (2) dann verhindern, wenn der Kolben (21) von seinem Anschlag (18) weg über ein bestimmtes Maß hinaus in Betätigungsrichtung verschoben wird.

18. Bremsanlage nach Anspruch 17 **dadurch gekennzeichnet, daß** die Sperrmittel (26) Klemmkörper umfassen.

## Claims

1. Brake system for motor vehicles which can be activated in a 'brake-by-wire' operating mode both by the operator and independently of the operator, which is preferably operated in the 'brake-by-wire' operating mode and can be operated in a fallback operating mode in which only the operation by the operator is possible, including
a) a brake pedal (1) for actuating a hydraulic piston-and-cylinder assembly (2), with an actuating force being exerted on the piston (21) thereof when the brake system is activated by the operator,
b) a travel simulator (3 and 31 to 33, respectively) cooperating with the hydraulic piston-and-cylinder assembly (2),
c) a pressure fluid supply tank (4) and a hydraulic auxiliary pressure source (5), the pressure of which can be applied to the wheel brakes in the 'brake-by-wire' operating mode,
d) an electronic control and regulation unit, as well as
e) electrically controllable pressure increase valves (7a, 7b) connected between the auxiliary pressure source (5) and the wheel brakes by the intermediary of separating piston devices (6a, 6b) and pressure decrease valves (8a, 8b) connected between the separating piston devices (6a, 6b) and the pressure fluid supply tank (4), in which case in the 'brake-by-wire' operating mode the separating piston devices (6a, 6b) are acted upon on a first separating piston surface (37a, 37b) by the pressure which is adjusted by the pressure increase valves (7a, 7b) and pressure decrease valves (8a, 8b) and convey the pressure exerted by a second separating piston surface (47a, 47b) to the wheel brakes,
**characterized in that** the pressure increase valves (7a, 7b) are designed as normally open (NO) valves, and **in that** upon current failure the separating piston devices (6a, 6b) are actuatable by means of a mechanically drivable pressure increase valve (12) in a direction which corresponds to the direction of actuation in the 'brake-by-wire' operating mode.

2. Brake system as claimed in claim 1,
**characterized in that** the piston (21) of the hydraulic piston-and-cylinder assembly (2) plunges into a hydraulic chamber (23) which, on the one hand, is connectable to the auxiliary pressure source (5) by way of an electrically controllable pressure increase valve (9) and, on the other hand, is connectable to the pressure fluid supply tank (4) by way of an electrically controllable connecting valve (11) as well as a mechanically controllable pressure decrease valve (13).

3. Brake system as claimed in claim 1 or 2,
**characterized in that** a stop (18) is provided for the piston (21) of the hydraulic piston-and-cylinder assembly (2), which limits the travel of the piston (21) in opposition to the direction of actuation.

4. Brake system as claimed in claim 3,
**characterized in that** the mechanically controllable pressure decrease valve (13) cooperates with the piston (21) of the hydraulic piston-and-cylinder assembly (2) in such a fashion that the mechanically controllable pressure decrease valve (13) opens shortly before the stop (18) is reached.

5. Brake system as claimed in claim 4,
**characterized in that** the mechanically controllable pressure decrease valve (13) is coupled to a mechanically controllable pressure increase valve (12) which brings about pressure increase in chamber (23) as soon as the piston (21) moves from the stop (18) in the direction of actuation beyond a rate which corresponds to a position of pressure increase.

6. Brake system as claimed in any one of claims 2 to 5,
**characterized in that** the separating piston devices (6a, 6b) are in each case connectable to the chamber (23) by way of an electrically controllable first pressure control valve (7a, 7b), on the one hand, and to the pressure fluid supply tank (4) by way of an electrically controllable second pressure control valve (8a, 8b) and the mechanically controllable pressure decrease valve (13), on the other hand.

7. Brake system as claimed in any one or more of the preceding claims,
**characterized in that** one separating piston device (6a, 6b) is associated with each wheel brake.

8. Brake system as claimed in any one or more of claims 1 to 7,
**characterized in that** the separating piston devices (6a, 6b) are actuated by applying a pressure to the first separating piston surface (37a, 37b).

9. Brake system as claimed in any one or more of claims 1 to 7,
**characterized in that** the separating piston devices (6a, 6b) are actuated by means (27) for coupling the displacement travel covered by the piston (21) to the displacement travels of the second separating piston surfaces (48a, 48b).

10. Brake system as claimed in any one or more of claims 1 to 8,
**characterized in that** the first separating piston surface (37a, 37b) is pressurized in a first fallback operating mode by a hydraulic pressure which is delivered by the auxiliary pressure source (5) and is adjusted by the mechanically actuated pressure increase and decrease valve combination (12, 13).

11. Brake system as claimed in claim 8,
**characterized in that** the first separating piston surface (37a, 37b) is pressurized in a second fallback operating mode by a pressure which is produced by immersion of the piston (21) into the chamber (23).

12. Brake system as claimed in claim 9,
**characterized in that** in a third fallback operating mode, the travel-coupling means (27) couple the travel of the piston (21) to the sum of the displacement travels of the second separating piston surfaces (38a, 38b) .

13. Brake system as claimed in claim 9 or 12,
**characterized in that** the travel-coupling means consist of a balance arm arrangement (27).

14. Brake system as claimed in claim 9 or 12,
**characterized in that** the travel-coupling means consist of a hydraulic force transmission mechanism (28, 29, 30, 38a,b).

15. Brake system as claimed in claim 14,
**characterized in that** the hydraulic force transmission mechanism consists of a one-circuit or dual-circuit pressure generator (28) as well as hydraulic chambers (38a, 38b) which divide the separating pistons into two independently movable portions (136a,b; 236a,b).

16. Brake system as claimed in any one or more of claims 2 to 15,
**characterized in that** in the 'brake-by-wire' operating mode a system pressure is set in the hydraulic chamber (23) by means of the electrically controllable pressure increase valve (9) and the electrically controllable connecting valve (11), from which system pressure wheel-individual brake pressures can be taken through the electrically controllable pressure control valves (7a, 8a, 7b, 8b) connected upstream of the separating piston devices (6a, 6b).

17. Brake system as claimed in any one or more of claims 1 to 16,
**characterized in that** locking means (26) are provided, which are active at least in the direction of actuation and prevent a relative movement of the travel simulator (3 and 31 to 33, respectively) in the direction of actuation relative to the piston (21) of the hydraulic piston-and-cylinder assembly (2) in the event that the piston (21) is displaced by a certain rate away from its stop (18) in the direction of actuation.

18. Brake system as claimed in claim 17,
**characterized in that** the locking means (26) comprise clamping elements.

## Revendications

1. Système de frein d'automobile permettant la commande dans une mode d'opération de « Brake-by-Wire » non seulement par le conducteur mais aussi de manière indépendante du conducteur, de préférence permettant l'opération dans la mode d'opération de « Brake-by-Wire » et dans une mode d'opération à renvoyer dans laquelle l'opération est possible seulement par le conducteur, le système comportant
(a) une pédale de frein (1) à opérer un dispositif piston-cylindre hydraulique (2) le piston (21) duquel est soumis à une force d'opération pendant l'opération du système de frein par le conducteur
(b) un simulateur de voie (3 respectivement 31-33) coopérant avec le dispositif piston-cylindre (2) hydraulique,
(c) un réservoir de fluide de pression (4) et une source de pression auxiliaire hydraulique (5) permettant d'alimenter la pression de la dernière aux freins de roue dans la mode d'opération de « Brake-by-Wire »,
(d) un dispositif de commande et contrôle électronique, et
(e) des soupapes d'accroissement de pression (7a, 7b) à commander de manière électrique disposées entre la source de pression auxiliaire (5) et les freins de roue, en prévoyant des pistons séparateurs (6a, 6b) entre eux, et des soupapes de perte de pression (8a, 8b) disposées entre les pistons séparateurs (6a, 6b) et le réservoir de fluide de pression (4), la pression réglée par l'intermédiaire des soupapes de pression d'accroissement (7a, 7b) et de pression de perte (8a, 8b) étant alimentée aux pistons séparateurs (6a, 6b) sur une surface de piston séparateur (37a, 37b) première dans la mode d'opération de « Brake-by-Wire » en transmettant la pression exercée par une surface de piston séparateur (47a, 47b) secondaire aux freins de roue,
**caractérisé en ce que**
les soupapes d'accroissement de pression (7a, 7b) sont formées comme soupapes ouvertes en condition dé-excitée (SO-), et que les pistons séparateurs (6a, 6b) en cas de manque de courant sont opérable par l'intermédiaire d'une soupape d'accroissement de pression (12) à commander de manière mécanique dans une direction correspondant à la direction d'opération dans la mode d'opération de « Brake-by-Wire ».

2. Système de frein selon la revendication 1, **caractérisé en ce que** le piston (21) du dispositif piston-cylindre (2) hydraulique plonge dans un espace hydraulique (23) reliable d'une part par l'intermédiaire d'une soupape d'accroissement de pression (9) à commander de manière électrique à la source de pression auxiliaire (5) et d'autre part reliable par l'intermédiaire d'une soupape (11) de raccordement à commander de manière électrique et d'une soupape de perte de pression (13) à commander de manière mécanique au réservoir de fluide de pression (4).

3. Système de frein selon les revendications 1 ou 2, **caractérisé en ce qu'**une butée (18) est prévue pour le piston (21) du dispositif piston-cylindre (2) hydraulique, la butée limitant la voie du piston (21) en sens contraire à la direction d'opération.

4. Système de frein selon la revendication 3, **caractérisé en ce que** la soupape de perte de pression (13) à commander de manière mécanique coopère avec le piston (21) du dispositif piston-cylindre (2) hydraulique de sorte que la soupape de perte de pression (13) à commander de manière mécanique aille s'ouvrir peu de temps avant arriver la butée (18).

5. Système de frein selon la revendication 4, **caractérisé en ce que** la soupape de perte de pression (13) à commander de manière mécanique est couplée à une soupape d'accroissement de pression (12) à commander de manière mécanique produisant un accroissement de pression dans l'espace (23) aussitôt que le piston (21) se meut en sens d'opération de la butée (18) l' hors d'une mesure correspondant à une position d'accroissement de pression.

6. Système de frein selon l'une des revendications 2 à 5, **caractérisé en ce que** chacun des mécanismes des pistons séparateurs (6a, 6b) d'une part sont reliable par l'intermédiaire d'une première soupape à régler la pression (7a, 7b) à commander de manière électrique à l'espace (23), et d'autre part par l'intermédiaire d'une seconde soupape à régler la pression (8a, 8b) à commander de manière électrique et la soupape de perte de pression (13) à commander de manière mécanique est reliable au réservoir de fluide der pression (4).

7. Système de frein selon l'une ou plusieurs de revendications précédentes, **caractérisé en ce qu'**un mécanisme de piston séparateur (6a, 6b) est associé à chaque frein de roue.

8. Système de frein selon l'une ou plusieurs de revendications 1 à 7, **caractérisé en ce que** l'opération des mécanismes de piston séparateur (6a, 6b) est effectuée par l'alimentation de pression à la surface première du piston séparateur (37a, 37b).

9. Système de frein selon l'une ou plusieurs de revendications 1 à 7, **caractérisé en ce que** l'opération des mécanismes de piston séparateur (6a, 6b) est effectuée par des moyens (27) à coupler la voie de déplacement couverte par le piston (21) à la voie de déplacement des surfaces secondaires de piston séparateur (48a, 48b).

10. Système de frein selon l'une ou plusieurs des revendications 1 à 8, **caractérisé en ce que** l'alimentation de pression à la première surface de piston séparateur (37a, 37b) est effectuée dans une première mode d'opération à renvoyer par l'intermédiaire d'une pression hydraulique fournie par la source de pression auxiliaire (5) et ajustée par la combinaison d'accroissement et de perte de pression (12, 13) actionnée de manière mécanique.

11. Système de frein selon la revendication 8, **caractérisé en ce que** l'alimentation de pression à la première surface de piston séparateur (37a, 37b) est effectuée dans une mode d'opération à renvoyer secondaire par l'intermédiaire d'une pression produite en plongeant le piston (21) dans l'espace (23).

12. Système de frein selon la revendication 9, **caractérisé en ce que** les moyens à coupler la voie (27), dans un troisième mode d'opération à renvoyer, couplent la voie du piston (21) au total des voies de déplacement des surfaces de piston séparateur (38a, 38b) secondaires.

13. Système de frein selon les revendications 9 ou 12, **caractérisé en ce que** les moyens à coupler la voie sont formés par un mécanisme de fléau (27).

14. Système de frein selon les revendications 9 ou 12, **caractérisé en ce que** les moyens à coupler la voie sont formés par un mécanisme de transmission de force (28, 29, 30, 38a, b) hydraulique.

15. Système de frein selon la revendication 14, **caractérisé en ce que** le mécanisme de transmission de force est formé par un capteur de pression (28) d'un ou deux circuits et par des espaces (38a, 38b) hydrauliques divisant les pistons séparateurs en deux sections (136a, b ; 236a, b) amovible de manière indépendante.

16. Système de frein selon l'une ou plusieurs de revendications 2 à 15, **caractérisé en ce qu'**une pression du système est ajustée dans la mode d'opération de « Brake-by-Wire » dans l'espace (23) hydraulique par l'intermédiaire d'une soupape d'accroissement de pression (9) à commander de manière électrique et de la soupape de raccordement (11) à commander de manière électrique, permettant de dériver des pressions de frein des roues individuelles par l'intermédiaire des soupapes à régler la pression (7a, 8a, 7b, 8b) à commander de manière électrique qui sont disposées avant les mécanismes de piston séparateur (6a, 6b).

17. Système de frein selon l'une ou plusieurs de revendications 1 à 16, **caractérisé en ce qu'**un mécanisme de barrage (26) effectif au moins en sens d'opération est pourvu empêchant un mouvement relatif du simulateur de voie (3 respectivement 31-33) en sens d'opération vis-à-vis le piston (21) du mécanisme piston-cylindre (2) hydraulique si le piston (21) se déplace de sa butée l'hors d'une mesure prédéterminée en sens d'opération.

18. Système de frein selon la revendication 17, **caractérisé en ce que** le mécanisme de barrage (26) comporte des mécanismes de serrage.
